(19) **Europäisches Patentamt / European Patent Office / Office européen des brevets**

(11) **EP 2 414 649 B1**

(12) **FASCICULE DE BREVET EUROPEEN**

(45) Date de publication et mention
de la délivrance du brevet:
**12.06.2013 Bulletin 2013/24**

(21) Numéro de dépôt: **10723199.5**

(22) Date de dépôt: **02.04.2010**

(51) Int Cl.:
*F01N 3/28* (2006.01)　　*F01N 3/021* (2006.01)

(86) Numéro de dépôt international:
**PCT/FR2010/050645**

(87) Numéro de publication internationale:
**WO 2010/112790 (07.10.2010 Gazette 2010/40)**

(54) **PROCÉDÉ DE FABRICATION D'UN ORGANE DE PURIFICATION DES GAZ D'ÉCHAPPEMENT D'UN VÉHICULE AUTOMOBILE**

VERFAHREN ZUR HERSTELLUNG EINER ABGASREINIGUNGSVORRICHTUNG

METHOD FOR MANUFACTURING A MEMBER FOR PURIFYING AUTOMOBILE EXHAUST GAS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **02.04.2009 FR 0952134**
**21.07.2009 US 227183 P**

(43) Date de publication de la demande:
**08.02.2012 Bulletin 2012/06**

(73) Titulaire: **Faurecia Systèmes d'Echappement**
**92000 Nanterre (FR)**

(72) Inventeurs:
• **CANTELE, Cyrille**
**F-90000 Belfort (FR)**
• **LERDUNG, Gérard**
**F-25700 Mathay (FR)**

(74) Mandataire: **Domenego, Bertrand**
**Cabinet Lavoix**
**2, place d'Estienne d'Orves**
**75441 Paris Cedex 09 (FR)**

(56) Documents cités:
**EP-A- 1 739 290　　WO-A-99/46028**
**US-A1- 2006 272 153　　US-B1- 6 389 693**

## Description

La présente invention concerne en général les procédés de fabrication des organes de purification de gaz d'échappement de véhicule automobile.

Plus précisément, l'invention concerne un procédé de fabrication d'un organe de purification des gaz d'échappement pour une ligne d'échappement de véhicule automobile, du type comportant une enveloppe sensiblement cylindrique définissant un canal de circulation des gaz d'échappement, un bloc de purification des gaz d'échappement sensiblement cylindrique disposé dans l'enveloppe, et un élément de maintien du bloc de purification des gaz d'échappement, le bloc de purification des gaz d'échappement présentant une paroi latérale tournée vers l'enveloppe et délimitant avec l'enveloppe un espace annulaire, ledit élément de maintien étant interposé dans l'espace annulaire entre l'enveloppe et la paroi latérale du bloc de purification des gaz d'échappement.

US-6 389 693 décrit un procédé de fabrication comprenant une étape de mesure du diamètre du bloc de purification des gaz, une étape de mesure de la masse de l'élément de maintien, et une étape de calcul du diamètre de l'enveloppe en fonction des mesures effectuées.

Dans certains organes de purification obtenus par ce procédé, on constate, en particulier après une période d'utilisation de l'organe de purification, que le bloc de purification des gaz d'échappement n'est plus correctement maintenu à l'intérieur de l'enveloppe.

L'invention a pour but de pallier au problème précité.

A cette fin, l'invention porte sur un procédé de fabrication d'un organe de purification du type précité. Ledit élément de maintien étant, au moment de la fabrication dudit organe, en un matériau comportant au moins un composant dit non-fonctionnel appelé à disparaître dudit élément de maintien après une période caractéristique d'utilisation dudit organe, ce procédé comprend les étapes consistant à :

- acquérir une première grandeur représentative d'une masse Mn de l'élément de maintien ;
- acquérir une seconde grandeur représentative d'une composition Cn en composant non-fonctionnel dudit élément de maintien ;
- déterminer, à partir des première et deuxième grandeurs acquises, une masse équivalente Mn' correspondant à la masse dudit élément de maintien après ladite période caractéristique d'utilisation dudit organe ;
- évaluer un volume V à partir de la masse équivalente et d'une densité de montage cible d de l'élément de maintien dans l'espace annulaire ;
- déterminer un diamètre de l'enveloppe en fonction d'un diamètre extérieur du bloc de purification des gaz d'échappement et du volume ;

- assembler l'enveloppe, l'élément de maintien et le bloc de purification des gaz d'échappement de manière à obtenir une enveloppe dont un diamètre est égal audit diamètre déterminé, la densité de montage de l'élément de maintien étant égale à la densité de montage cible après ladite période caractéristique d'utilisation dudit organe.

Suivant des modes particuliers de réalisation, le procédé comporte une ou plusieurs des caractéristiques suivantes, prise(s) isolément ou suivant toutes les combinaisons techniquement possibles :

- l'acquisition de la seconde grandeur représentative d'une composition en composant non-fonctionnel dudit élément de maintien consiste à :

  ■ mesurer une grandeur électrique caractéristique dudit élément de maintien ;
  ■ déterminer la composition à partir de la valeur mesurée de ladite grandeur électrique ;

- la composition en composant non-fonctionnel dudit élément de maintien au moment du montage est déterminée à partir de la valeur mesurée de ladite grandeur électrique au moyen de courbes de calibration ;
- ledit élément de maintien est une nappe, et l'étape de mesure de ladite grandeur électrique caractéristique dudit élément de maintien consiste à placer la nappe, selon son épaisseur, entre des plaques d'un capteur capacitif et à mesurer la valeur de la capacité du capteur capacitif pour une tension prédéterminée appliquée auxdites plaques ;
- le procédé comporte, en outre, une étape d'acquisition d'une troisième grandeur représentative d'une masse du bloc de purification des gaz d'échappement, et une étape de détermination, à partir de la troisième grandeur acquise, de ladite densité de montage cible ;
- ladite densité de montage cible consiste à calculer, à partir de la troisième grandeur acquise, un effort maximum de référence appliqué au bloc de purification des gaz au cours de l'utilisation dudit organe, puis à déterminer la densité de montage cible à partir de l'effort maximum de référence calculé, de préférence au moyen de cartographies prédéterminées ;
- l'enveloppe, ledit élément de maintien et le bloc de purification des gaz d'échappement sont assemblés selon les étapes suivantes :

  ■ disposer ledit élément de maintien autour du bloc de purification des gaz d'échappement,
  ■ insérer ledit élément de maintien et le bloc de purification des gaz d'échappement dans l'enveloppe de manière à obtenir un diamètre provisoire de l'enveloppe supérieur au diamètre déterminé et une densité de montage provisoire pour ledit élément de maintien,

■ restreindre l'enveloppe au diamètre déterminé ;

- l'étape d'insertion est réalisée en insérant à force ledit élément de maintien et le bloc de purification des gaz d'échappement dans l'enveloppe, ou en roulant l'enveloppe autour dudit élément de maintien ;
- l'enveloppe, ledit élément de maintien et le bloc de purification des gaz d'échappement sont assemblés selon les étapes suivantes :

■ disposer ledit élément de maintien autour du bloc de purification des gaz d'échappement,
■ insérer ledit élément de maintien et le bloc de purification des gaz d'échappement dans l'enveloppe de manière à obtenir directement le diamètre déterminé pour l'enveloppe ;

- le procédé comporte une étape supplémentaire consistant à acquérir une quatrième grandeur correspondant au diamètre extérieur du bloc de purification des gaz d'échappement.

D'autres caractéristiques et avantages de l'invention ressortiront plus clairement de la description détaillée qui va suivre, donnée à titre indicatif et nullement limitatif, et faite en référence aux dessins annexées, sur lesquelles :

- la figure 1 est une coupe longitudinale d'un organe de purification fabriqué conformément au procédé de l'invention ;
- la figure 2 est un diagramme montrant les étapes du procédé de l'invention permettant de déterminer le diamètre de l'enveloppe à fabriquer ;
- les figures 3 à 6 sont des vues schématiques illustrant les différentes étapes de l'assemblage de l'organe de purification.

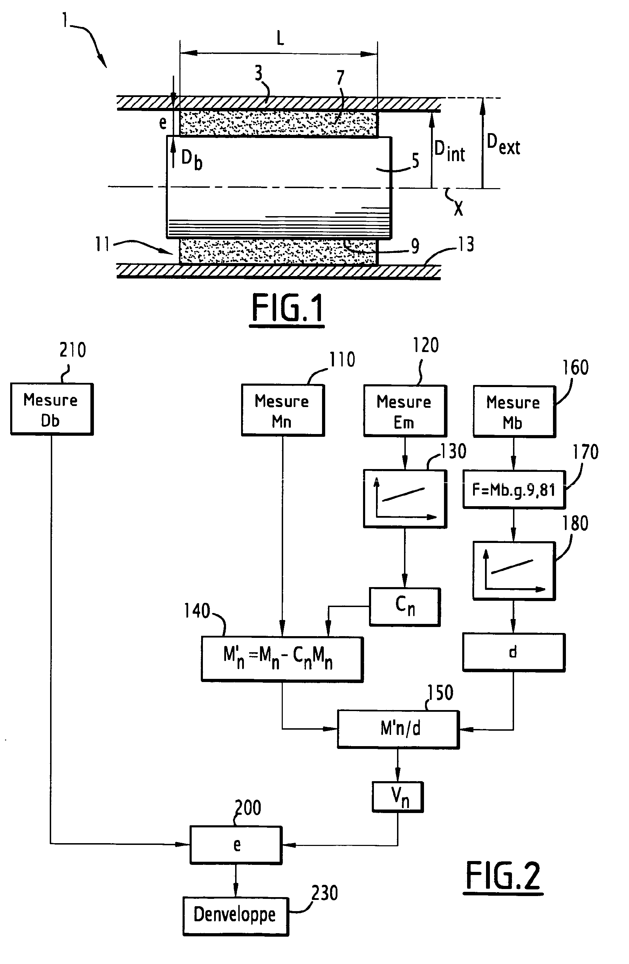

L'organe de purification des gaz d'échappement 1, représenté sur la figure 1, est destiné à être disposée dans une ligne d'échappement (non représentée) d'un véhicule automobile. Il comporte une enveloppe 3 sensiblement cylindrique, un bloc de purification des gaz d'échappement 5 sensiblement cylindrique, placé à l'intérieur de l'enveloppe 3, et une nappe 7, disposée entre le bloc 5 et l'enveloppe 3, pour maintenir le bloc de purification des gaz d'échappement 5. L'enveloppe 3 et le bloc 5 sont sensiblement coaxiaux. Cet axe commun est noté X sur la figure 1.

L'enveloppe 3 est une enveloppe métallique prévue pour être raccordée, vers l'amont de la ligne d'échappement, à un cône divergent définissant une entrée pour les gaz d'échappement, et, vers l'aval de la ligne d'échappement, à un cône convergent définissant une sortie pour les gaz d'échappement. L'entrée est reliée au collecteur de la ligne d'échappement, qui capte les gaz d'échappement sortant des chambres de combustion du moteur. La sortie est reliée à la canule par laquelle les gaz d'échappement sont relâchés dans l'atmosphère.

L'amont et l'aval sont entendus ici relativement au sens de circulation normal des gaz d'échappement.

L'enveloppe 3 définit donc intérieurement un canal de circulation des gaz d'échappement. Ceux-ci circulent depuis l'entrée jusqu'à la sortie en traversant le bloc 5. En passant à travers le bloc 5, les gaz d'échappement sont purifiés.

Le bloc 5 est typiquement un élément de purification catalytique ou un filtre à particules. Un élément de purification catalytique est typiquement constitué par une structure perméable aux gaz, recouverte de métaux catalytiques favorisant l'oxydation des gaz de combustion et/ou la réduction des oxydes d'azote. Un filtre à particules est réalisé en un matériau de filtration constitué d'une structure monolithique en céramique ou en carbure de silicium ayant une porosité suffisante pour permettre le passage des gaz d'échappement. Cependant, comme connu en soi, le diamètre des pores est choisi suffisamment petit pour assurer une retenue des particules, et notamment des particules de suie, sur la face amont du filtre. Le filtre à particules peut également être constitué d'un filtre cartouche ou d'un filtre en métal fritté. De préférence, un filtre à particules comporte un ensemble de canaux parallèles, répartis en un premier groupe de canaux d'entrée et un second groupe de canaux de sortie. Les canaux d'entrée et de sortie sont disposés en quinconce. Les canaux d'entrée sont débouchants sur la section amont du filtre à particules et obturées au niveau de la section aval du filtre à particules. Au contraire, les canaux de sortie sont obturés sur la section amont du filtre à particules et sont débouchants sur sa section aval.

Le bloc 5 présente un diamètre Db inférieur au diamètre de l'enveloppe 3. Il présente une paroi latérale 9 tournée vers une paroi intérieure 13 de l'enveloppe 3. La paroi latérale 9 et la paroi intérieure 13 délimitent un espace annulaire 11.

La nappe de maintien 7 est par exemple formée d'un matériau intumescent. La nappe peut être du type XPEAV2 vendu par la société UNIFRAX ou par exemple du type vendu sous le nom NEXTEL SAFFIL ou 3M, ou du type vendu sous le nom CC-MAX ou FIBERMAX par la société UNIFRAX.

La nappe 7 est réalisée en un matériau comportant des composants fonctionnels, tels que des fibres, du mica, etc., qui participent à la génération de frottements à la surface du bloc 5 et de l'enveloppe 3, et des composants non-fonctionnels, tels que de l'eau, des liants, un film protecteur, de la colle, etc. qui augmentent la cohésion de la nappe pour faciliter sa manipulation et son montage.

Une fois l'organe 1 fabriqué, la nappe de maintien 7 est disposée dans l'espace annulaire 11 et s'étend sur une longueur qui correspond à la majeure partie de la longueur du bloc 5. La nappe 7 est alors comprimée entre la paroi latérale 9 du bloc 5 et la paroi intérieure 13 de l'enveloppe 3. Par conséquent, elle exerce une pression sur le bloc 5. Quand le bloc 5 est soumis à un effort longitudinal, les frictions entre le bloc 5 et la nappe 7, et entre la nappe 7 et l'enveloppe 3 sont telles que le déplacement du bloc 5 par rapport à l'enveloppe 3 est interdit, ou tout au moins très limité. La nappe 7 constitue ainsi un élément de maintien du bloc 5 en position par rapport à l'enveloppe 3.

Pour obtenir cet effet, il est nécessaire de monter la nappe 7 dans l'espace annulaire 11 avec une densité de montage adéquate. On appelle densité de montage, la masse volumique de la nappe 7 logée dans l'espace annulaire 11, à température ambiante. Cette densité de montage ne doit pas être trop faible car le bloc 5 serait incorrectement maintenu en position par rapport à l'enveloppe 3. La densité de montage ne doit pas non plus être trop élevée, pour éviter d'endommager le bloc 5, notamment à long terme.

Or, au-delà d'une période caractéristique d'utilisation de l'organe de purification 1, les composants non-fonctionnels du matériau de la nappe 7 ont été brûlés. Par conséquent, au cours de l'utilisation de l'organe 1, la masse de la nappe 7 diminue d'abord, pour se stabiliser ensuite à une valeur constante au-delà de la période caractéristique d'utilisation. Ainsi, la masse volumique de la nappe 7, c'est-à-dire la densité de montage de la nappe 7, diminue d'abord, pour se stabiliser ensuite à une valeur constante.

Le procédé de fabrication exposé ci-dessous prend en compte cette évolution de la densité de montage au cours de l'utilisation de l'organe de manière à garantir que la densité de montage au-delà de la période caractéristique d'utilisation soit égale à une densité de montage cible d adaptée au maintien du bloc 5.

Le procédé comporte une première phase visant à déterminer le diamètre, par exemple le diamètre intérieur Dint, de l'enveloppe 3 de l'organe de purification 1.

Comme cela est représenté sur la figure 2, le procédé comporte un premier ensemble d'étapes permettant de déterminer une masse équivalente Mn' d'une nappe 7 devant être utilisée dans la fabrication d'un organe 1 particulier.

Pour ce faire, le procédé comporte une étape 110 d'acquisition d'une grandeur correspondant à la masse Mn de la nappe 7. Cette masse Mn est la masse de la nappe 7 au moment du montage. La masse Mn est par exemple directement mesurée à l'aide d'une balance.

Le procédé selon l'invention anticipe la diminution de la masse de la nappe 7 au cours de l'utilisation de l'organe 1 en réalisant l'acquisition d'une grandeur correspondant à la composition Cn de la nappe 7. Tout au moins, cette composition Cn correspond à la fraction en masse des composants non-fonctionnels de la nappe 7 au moment du montage.

Par exemple, à l'étape 120, une épaisseur de nappe 7 est placée entre les plaques d'un capteur capacitif apte à générer, en réponse à l'application d'une tension électrique prédéterminée, une mesure En d'une caractéristique électrique de la nappe 7. Puis, à l'étape 130, on détermine la composition Cn de la nappe 7 à l'aide de courbes de calibration, chaque courbe de calibration étant associée à un type particulier de nappe. En reportant la mesure En sur la courbe de calibration associée au type de la nappe 7 à monter, on détermine la composition Cn de la nappe 7.

A l'étape 140, la masse Mn de la nappe 7 est corrigée pour obtenir la masse équivalente Mn'. Pour cela, on retranche de la masse Mn, la masse des composants non-fonctionnels donnée par le produit Cn x Mn.

A l'étape 150, une densité cible de montage d ayant été déterminée au préalable, le procédé consiste à évaluer un volume Vn qui permettrait d'atteindre la densité cible d avec la masse équivalente Mn'. Le volume Vn est déterminé au moyen de la formule suivante :

$$Vn = Mn' / d$$

De préférence, le procédé comporte un second ensemble d'étapes pour déterminer la densité de montage cible d en fonction des caractéristiques du bloc 5. Ainsi, le procédé comporte une étape 160 d'acquisition d'une grandeur correspondant à la masse Mb du bloc 5. La masse Mb est par exemple directement mesurée à l'aide d'une balance.

Puis le procédé se poursuit par une étape 170 au cours de laquelle on calcule un effort maximum de référence F correspondant à l'effort longitudinal maximum que peut subir le bloc 5 sans pour autant bouger par rapport à l'enveloppe 3. L'effort F peut être calculé à l'aide de la formule empirique suivante :

$$F = Mb \times g \times 9.81$$

où g est l'accélération longitudinale appliquée au bloc 5. On utilise pour calculer F une accélération g prédéterminée. Cette accélération prédéterminée correspond par exemple à l'accélération maximum que peut subir le bloc 5 dans des situations limites d'utilisation du véhicule. Ces situations limites sont par exemple un départ arrêté avec une forte accélération, un freinage d'urgence, ou encore un choc du véhicule contre un obstacle à vitesse modérée.

A l'étape 180, on détermine ensuite la densité de montage cible d de la nappe 7 en fonction de l'effort F calculé plus haut. La densité de montage cible d est déterminée à l'aide de cartographies prédéterminées. Ces cartographies sont issues d'essais du véhicule sur banc et/ou sur route. Elles donnent la densité cible d en fonction de l'effort F pour différents types de nappes et différents types de blocs.

A l'étape 200, on détermine l'épaisseur e à prévoir pour l'espace annulaire 11 entre la paroi latérale 9 et la paroi intérieure 13. Cette épaisseur e est calculée en divisant le volume Vn par la surface Sn de la paroi latérale 9 du bloc 5 recouverte par la nappe 7 : Sn= L x Π x Db.

De préférence, comme le montre la figure 2, le procédé comporte un troisième ensemble d'étapes permettant de déterminer Db pour un bloc 5 particulier devant servir à la fabrication de l'organe 1. Ainsi, à l'étape 210 on acquiert une grandeur représentative du diamètre Db du bloc de purification des gaz 5. Le diamètre Db correspond par exemple à la moyenne de plusieurs mesures du diamètre extérieur du bloc 5, réalisées sur différentes sections du bloc 5. Ces sections sont par exemple régulièrement espacées longitudinalement. La grandeur Db peut également correspondre au maximum des valeurs relevées en différents points du bloc 5.

Finalement, la première phase du procédé se terminé à l'étape 230, par la détermination du diamètre interne Dint de l'enveloppe 3 à l'aide de la valeur calculée de l'épaisseur e et du diamètre Db du bloc 5 : Dint = Db + 2e

En variante, on peut choisir de déterminer le diamètre extérieur de l'enveloppe 3 : Dext = Db+ 2e + 2 Ep

où Ep est l'épaisseur de l'enveloppe 3. Ep peut être mesurée ou être fournie par le fabriquant de l'enveloppe 3.

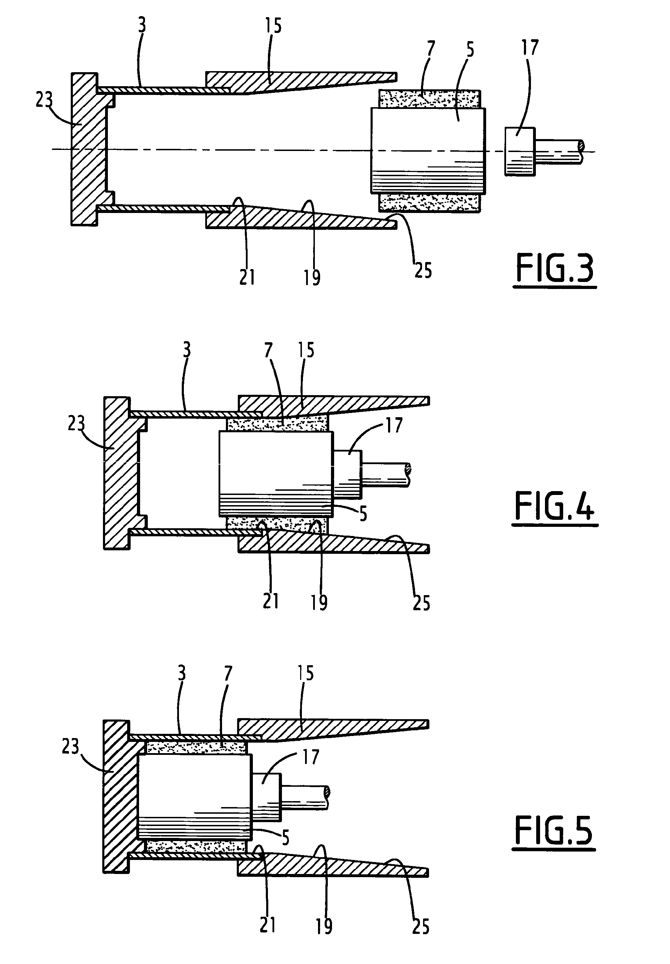

Au cours d'une deuxième phase du procédé, deuxième phase illustrée sur les figures 3 à 7, on assemble l'enveloppe 3, la nappe 7 et le bloc de purification des gaz 5, de manière à obtenir une enveloppe 3 dont le diamètre intérieur est égal au diamètre intérieur déterminé Dint à l'issue de la première phase du procédé.

Dans une première variante de réalisation, on approvisionne une enveloppe 3 de diamètre interne égal au diamètre intérieur déterminé Dint. La nappe 7 est d'abord disposée autour du bloc 5. Puis, la nappe 7 et le bloc 5 sont insérés conjointement dans l'enveloppe 3. Par exemple, la nappe 7 et le bloc 5 sont insérés à force dans l'enveloppe 3, à l'aide d'un rétreint 15 et d'un piston 17. Le rétreint 15 comporte un canal interne 19 convergent sensiblement tronconique. L'extrémité 21 de petit diamètre du canal 19 présente un diamètre interne sensiblement égal au diamètre interne de l'enveloppe 3. L'enveloppe 3 est placée à côté et dans le prolongement de l'extrémité 21. Elle est bloquée par rapport au rétreint 15 par une butée 23. Le bloc 5 et la nappe 7 sont forcés le long du canal interne 19 à partir de l'extrémité 25 de plus grand diamètre par le piston 17. La nappe 7 est progressivement comprimée au fur et à mesure que le bloc 5 et la nappe 7 se déplacent le long du canal interne 19 et pénètrent dans l'enveloppe 3 (figure 4). Le piston 17 pousse la nappe 7 et le bloc 5 jusqu'à ce que ceux-ci soient entièrement logés à l'intérieur de l'enveloppe 3 (figure 5). Par exemple, la butée 23 sert à limiter la course du bloc 5 et de la nappe 7 et à les arrêter à la position souhaitée par rapport à l'enveloppe 3.

Finalement, la nappe 7 est comprimée à une densité de montage supérieure à la densité cible d. Mais, au cours de l'utilisation de l'organe 1, la densité de montage va progressivement diminuer pour atteindre la densité de montage cible d.

Dans une autre variante de réalisation, on approvisionne une enveloppe 3 de diamètre interne légèrement supérieur au diamètre intérieur déterminé Dint. Cette variante est décrite dans US 6,389,693.

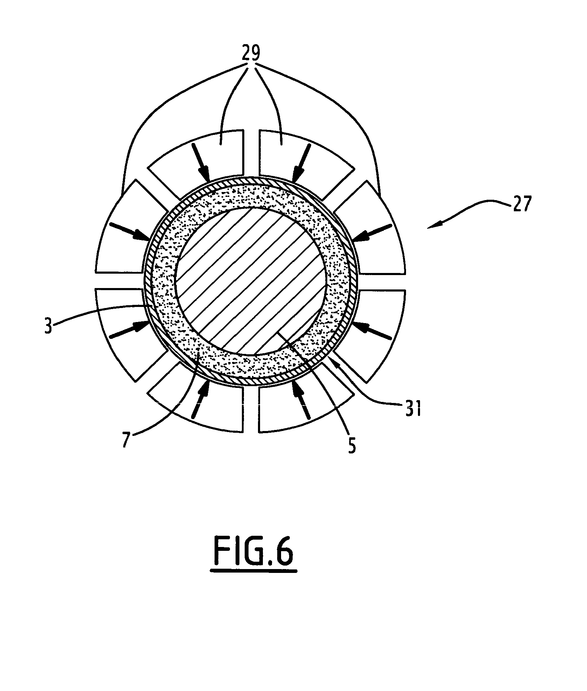

Comme précédemment, la nappe 7 est d'abord disposée autour du bloc 5. Puis, la nappe 7 et le bloc 5 sont insérés dans l'enveloppe 3, par exemple à l'aide du rétreint 15 et du piston 17, selon la procédure décrite en référence aux figures 3 à 5. Comme illustré sur la figure 6, on rétreint ensuite l'enveloppe 3 au diamètre intérieur déterminé Dint. A cette fin, l'organe 1 est placé dans un outil cylindrique de compression 27, comme illustré sur la figure 6. L'outil 27 comporte une pluralité de secteurs 29 délimitant intérieurement une cavité 31 dans laquelle est placé l'organe de purification 1. Les secteurs 29 sont répartis circonférentiellement, autour de la cavité 31. Ils sont initialement séparés les uns des autres par des interstices circonférentiels. L'outil 27 comporte également des moyens pour solliciter, de manière contrôlée, radialement et vers l'intérieur de la cavité, les différents secteurs 29. Les secteurs 29 viennent alors en appui sur la paroi extérieure de l'enveloppe 3 et vont contraindre celle-ci jusqu'à ce que l'enveloppe 3 présente un diamètre égal au diamètre intérieur déterminé Dint.

La nappe 7 est alors comprimée à une densité de montage supérieure à la densité de montage cible d. Mais, au cours de l'utilisation de l'organe 1, la densité de montage va progressivement diminuer pour atteindre la densité de montage cible d.

Le procédé présenté ci-dessus présente de multiples avantages.

Il permet de fabriquer de manière plus précise l'organe de purification. Notamment, le diamètre de l'enveloppe est dimensionné de manière anticiper l'évolution de la densité de montage de la nappe au cours de l'utilisation de l'organe. La longévité de celui-ci est améliorée.

Pour un bloc de céramique de forme plus complexe, le procédé peut permettre d'éviter l'utilisation d'un joint contre l'érosion. En effet l'érosion est directement dépendante de la densité de montage de la nappe. Une forte érosion peut être constatée lorsque la densité de montage est trop faible ou trop élevée. Une meilleure maîtrise de la densité de montage permet donc d'écarter le système des densités à risque pour l'érosion.

Le procédé décrit ci-dessus peut présenter de multiples variantes.

Dans une variante non préférée, seule la composition de la nappe est mesurée, et on utilise un diamètre prédéterminé pour le bloc, une densité de montage cible prédéterminée, et/ou une masse prédéterminée pour la nappe.

L'élément de maintien du bloc a été décrit comme comportant une unique nappe 7, mais, en variante, plusieurs nappes peuvent être utilisées. De plus, le bloc n'est pas nécessairement maintenu uniquement par une ou plusieurs nappe(s). Il peut être maintenu par un ou plusieurs joints, typiquement deux joints placés aux deux extrémités axiales du bloc. Les joints peuvent être des joints toriques, placés autour du bloc dans l'espace annulaire séparant le bloc de l'enveloppe.

La nappe et le bloc ne sont pas nécessairement insérés dans l'enveloppe à l'aide d'un rétreint. Par exemple, l'enveloppe peut être roulée autour de la nappe.

**Revendications**

1. Procédé de fabrication d'un organe de purification des gaz d'échappement pour une ligne d'échappement de véhicule automobile, l'organe de purification (1) étant du type comportant une enveloppe (3) sensiblement cylindrique définissant un canal de circulation des gaz d'échappement, un bloc de purification des gaz d'échappement (5) sensiblement cylindrique disposé dans l'enveloppe, et un élément de maintien (7) du bloc de purification des gaz d'échappement (5), le bloc de purification des gaz d'échappement présentant une paroi latérale (9) tournée vers l'enveloppe (3) et délimitant avec l'enveloppe (3) un espace annulaire (11), ledit élément de maintien (7) étant interposé dans l'espace annulaire (11) entre l'enveloppe (3) et la paroi latérale (9) du bloc de purification des gaz d'échappement (5), **caractérisé en ce que** ledit élément de maintien (7) est, au moment de la fabrication dudit organe, en un matériau comportant au moins un composant dit nonfonctionnel appelé à disparaître dudit élément de maintien après une période caractéristique d'utilisation dudit organe, et **en ce que** le procédé comprend les étapes consistant à :

   - acquérir une première grandeur représentative d'une masse (Mn) dudit élément de maintien (7) ;
   - acquérir une seconde grandeur représentative d'une composition (Cn) en composant non-fonctionnel dudit élément de maintien (7) ;
   - déterminer, à partir des première et deuxième grandeurs acquises, une masse équivalente (Mn') correspondant à la masse dudit élément de maintien après ladite période caractéristique d'utilisation dudit organe ;
   - évaluer un volume (Vn) à partir de la masse équivalente et d'une densité de montage cible (d) dudit élément de maintien (7) dans l'espace annulaire (11) ;
   - déterminer un diamètre (Dint) de l'enveloppe (3) en fonction d'un diamètre extérieur du bloc de purification des gaz d'échappement (5) et dudit volume (Vn) ;
   - assembler l'enveloppe (3), ledit élément de maintien (7) et le bloc de purification des gaz d'échappement (5) de manière à obtenir une enveloppe (3) dont un diamètre est égal audit diamètre déterminé (Dint), la densité de montage (d) dudit élément de maintien (7) étant égale à la densité de montage cible (d) après ladite période caractéristique d'utilisation dudit organe.

2. Procédé selon la revendication 1, **caractérisé en ce que** l'acquisition de la seconde grandeur représentative d'une composition (Cn) en composant non-fonctionnel dudit élément de maintien (7) consiste à :

   - mesurer une grandeur électrique caractéristique dudit élément de maintien ;
   - déterminer la composition (Cn) à partir de la valeur mesurée de ladite grandeur électrique.

3. Procédé selon la revendication 2, **caractérisé en ce que** la composition (Cn) en composant non-fonctionnel dudit élément de maintien (7) au moment du montage est déterminée à partir de la valeur mesurée de ladite grandeur électrique au moyen de courbes de calibration.

4. Procédé selon la revendication 2 ou la revendication 3, **caractérisée en ce que** ledit élément de maintien (7) est une nappe, et **en ce que** l'étape de mesure de ladite grandeur électrique caractéristique dudit élément de maintien consiste à placer la nappe, selon son épaisseur, entre des plaques d'un capteur capacitif et à mesurer la valeur de la capacité du capteur capacitif pour une tension prédéterminée appliquée audites plaques.

5. Procédé selon l'une quelconque des revendications 1 à 4, **caractérisé en ce que** le procédé comporte, en outre, une étape d'acquisition d'une troisième grandeur représentative d'une masse (Mb) du bloc de purification des gaz d'échappement (5), et une étape de détermination, à partir de la troisième grandeur acquise, de ladite densité de montage cible (d).

6. Procédé selon la revendication 5, **caractérisé en ce que** la détermination de ladite densité de montage cible (d) consiste à calculer, à partir de la troisième grandeur acquise, un effort maximum de référence (F) appliqué au bloc de purification des gaz (5) au cours de l'utilisation dudit organe, puis à déterminer la densité de montage cible (d) à partir de l'effort maximum de référence (F) calculé, de préférence au moyen de cartographies prédéterminées.

7. Procédé selon l'une quelconque des revendications 1 à 6, **caractérisé en ce que** l'enveloppe (3), ledit élément de maintien (7) et le bloc de purification des gaz d'échappement (5) sont assemblés selon les étapes suivantes :

- disposer ledit élément de maintien (7) autour du bloc de purification des gaz d'échappement (5) ;
- insérer ledit élément de maintien (7) et le bloc de purification des gaz d'échappement (5) dans l'enveloppe (3) de manière à obtenir un diamètre provisoire de l'enveloppe (3) supérieur au diamètre déterminé ($D_{int}$) et une densité de montage provisoire pour ledit élément de maintien (7) ;
- restreindre l'enveloppe (3) au diamètre déterminé ($D_{int}$).

8. Procédé selon la revendication 7, **caractérisé en ce que** l'étape d'insertion est réalisée en insérant à force ledit élément de maintien (7) et le bloc de purification des gaz d'échappement (5) dans l'enveloppe (3), ou en roulant l'enveloppe (3) autour dudit élément de maintien (7).

9. Procédé selon l'une quelconque des revendications 1 à 6, **caractérisé en ce que** l'enveloppe (3), ledit élément de maintien (7) et le bloc de purification des gaz d'échappement (5) sont assemblés selon les étapes suivantes :

- disposer ledit élément de maintien (7) autour du bloc de purification des gaz d'échappement (5) ;
- insérer ledit élément de maintien (7) et le bloc de purification des gaz d'échappement (5) dans l'enveloppe (3) de manière à obtenir directement le diamètre déterminé ($D_{int}$) pour l'enveloppe (3).

10. Procédé selon l'une quelconque des revendications 1 à 9, **caractérisé en ce qu'**il comporte une étape supplémentaire consistant à acquérir une quatrième grandeur correspondant au diamètre extérieur (Db) du bloc de purification des gaz d'échappement (5).

**Patentansprüche**

1. Verfahren zur Herstellung einer Abgasreinigungseinrichtung für eine Abgasleitung eines Kraftfahrzeugs, wobei die Abgasreinigungseinrichtung (1) von dem Typ ist, der folgendes aufweist: eine im wesentlichen zylinderförmige Umhüllung (3), die einen Zirkulationskanal für die Abgase bildet, einen im wesentlichen zylinderförmigen Abgasreinigungsblock (5), der in der Umhüllung angeordnet ist, und ein Halteelement (7) für den Abgasreinigungsblock (5), wobei der Abgasreinigungsblock eine Seitenwand (9) aufweist, die der Umhüllung (3) zugewandt ist und mit der Umhüllung (3) einen ringförmigen Raum (11) begrenzt, wobei das Halteelement (7) zwischen der Umhüllung (3) und der Seitenwand (9) des Abgasreinigungsblockes (5) in den ringförmigen Raum (11) eingesetzt ist, **dadurch gekennzeichnet, dass** das Halteelement (7) zum Zeitpunkt der Herstellung der Einrichtung ein Material aufweist, das mindestens einen sogenannten nicht-funktionellen Bestandteil besitzt und dazu dient, nach einem charakteristischen Zeitraum der Verwendung der Einrichtung von dem Halteelement zu verschwinden, und **dass** das Verfahren die folgenden Schritte aufweist:

- Ermitteln einer ersten Größe, die repräsentativ für eine Masse (Mn) des Halteelementes (7) ist;
- Ermitteln einer zweiten Größe, die repräsentativ für eine Zusammensetzung (Cn) aus einem nicht-funktionellen Bestandteil des Halteelementes (7) ist;
- Bestimmen einer äquivalenten Masse (Mn') aus den ermittelten ersten und zweiten Größen, die der Masse des Halteelementes nach dem charakteristischen Zeitraum der Verwendung der Einrichtung entspricht;
- Berechnen eines Volumens (Vn) aus der äquivalenten Masse und einer Montagesolldichte (d) des Halteelementes (7) in dem ringförmigen Raum (11);
- Bestimmen eines Durchmessers (Din) der Umhüllung (3) in Abhängigkeit von einem Außendurchmesser des Abgasreinigungsblockes (5) und des Volumens (Vn);
- Zusammenbauen der Umhüllung (3), des Halteelementes (7) und des Abgasreinigungsblockes (5), so dass man eine Umhüllung (3) erhält, deren Durchmesser dem bestimmten Durchmesser (Dint) entspricht, wobei die Montagediclite (d) des Halteelementes (7) gleich der Montagesolldichte (d) nach dem charakteristischen Zeitraum der Verwendung der Einrichtung ist.

2. Verfahren nach Anspruch 1,
**dadurch gekennzeichnet,**
**dass** das Ermitteln der zweiten Größe, die repräsentativ für eine Zusammensetzung (Cn) aus einem nicht-funktionellen Bestandteil des Halteelementes (7) ist, folgendes aufweist:

- Messen einer elektrischen Größe, die für das Halteelement charakteristisch ist;
- Bestimmen der Zusammensetzung (Cn), ausgehend von dem gemessenen Wert der elektrischen Größe.

3. Verfahren nach Anspruch 2,
**dadurch gekennzeichnet,**
**dass** die Zusammensetzung (Cn) aus einem nicht-funktionellen Bestandteil des Halteelementes (7) zu dem Zeitpunkt der Montage mittels einer Kalibrierkurve aus dem gemessenen Wert der elektrischen Größe bestimmt wird.

**4.** Verfahren nach Anspruch 2 oder Anspruch 3, **dadurch gekennzeichnet,** **dass** es sich bei dem Halteelement (7) um eine Einlage handelt und dass der Schritt des Messens der für das Halteelement charakteristischen elektrischen Größe das Anbringen der Einlage gemäß ihrer Stärke zwischen den Platten eines kapazitiven Sensors und das Messen des Kapazitätswertes des kapazitiven Sensors für eine vorgegebene Spannung aufweist, die an die Platten anlegt wird.

**5.** Verfahren nach einem der Ansprüche 1 bis 4, **dadurch gekennzeichnet,** **dass** das Verfahren weiterhin einen Schritt des Ermittelns einer dritten Größe aufweist, die repräsentativ für eine Masse (Mb) des Abgasreinigungsblockes (5) ist, und, ausgehend von der dritten ermittelten Größe, einen Schritt der Bestimmung der Montagesolldichte (d) aufweist.

**6.** Verfahren nach Anspruch 5, **dadurch gekennzeichnet,** **dass** die Bestimmung der Montagesolldichte (d) folgendes aufweist:

Berechnen, ausgehend von der dritten ermittelten Größe, einer maximalen Referenzkraft (F), die im Laufe der Verwendung der Einrichtung auf den Abgasreinigungsblock (5) ausgeübt wird, und anschließendes Bestimmen der Montagesolldichte (d), ausgehend von der berechneten maximalen Referenzkraft (F), vorzugsweise mittels vorgegebener Kennlinienfelder.

**7.** Verfahren nach einem der Ansprüche 1 bis 6, **dadurch gekennzeichnet,** **dass** die Umhüllung (3), das Halteelement (7) und der Abgasreinigungsblock (5) gemäß den nachfolgenden Schritten montiert werden:

- Anordnen des Halteelementes (7) um den Abgasreinigungsblock (5) herum;
- Einschieben des Halteelementes (7) und des Abgasreinigungsblockes (5) in die Umhüllung (3), so dass man einen vorläufigen Durchmesser der Umhüllung (3), der größer ist als der bestimmte Durchmesser ($D_{int}$), und eine vorläufige Montagedichte für das Halteelement (7) erhält;
- Einengen der Umhüllung (3) auf den bestimmten Durchmesser ($D_{int}$).

**8.** Verfahren nach Anspruch 7, **dadurch gekennzeichnet,** **dass** der Schritt des Einschiebens durchgeführt wird, indem das Halteelement (7) und der Abgasreinigungsblock (5) mit einer Kraftausübung in die Umhüllung (3) eingeschoben werden, oder indem die Umhüllung (3) um das Halteelement (7) herumwickelt wird.

**9.** Verfahren nach einem der Ansprüche 1 bis 6, **dadurch gekennzeichnet,** **dass** die Umhüllung (3), das Halteelement (7) und der Abgasreinigungsblock (5) gemäß den nachfolgenden Schritten montiert werden:

- Anordnen des Halteelementes (7) um den Abgasreinigungsblock (5) herum;
- Einschieben des Halteelementes (7) und des Abgasreinigungsblockes (5) in die Umhüllung (3), so dass man den bestimmten Durchmesser ($D_{int}$) für die Umhüllung (3) direkt erhält.

**10.** Verfahren nach einem der Ansprüche 1 bis 9, **dadurch gekennzeichnet,** **dass** es einen zusätzlichen Schritt aufweist, um eine vierte Größe zu ermitteln, die dem Außendurchmesser (Db) des Abgasreinigungsblockes (5) entspricht.

**Claims**

**1.** Method for manufacturing a member for purifying exhaust gases for an automobile exhaust system, the purification member (1) being of the type comprising a jacket (3) which is approximately cylindrical and defines a channel for circulation of the exhaust gases, a unit for purifying exhaust gases (5) which is approximately cylindrical and disposed in the jacket, and a retaining element (7) for the unit for purifying exhaust gases (5), the unit for purifying exhaust gases having a lateral wall (9) which is turned towards the jacket (3) and delimits with the jacket (3) an annular space (11), said retaining element (7) being interposed in the annular space (11) between the jacket (3) and the lateral wall (9) of the unit for purifying exhaust gases (5), **characterised in that** said retaining element (7) is, at the time of the manufacture of said member, made of a material comprising at least one component which is termed non-functional and is intended to disappear from said retaining element after a characteristic period of use of said member, and **in that** the method comprises the steps consisting of:

- obtaining a first quantity which is representative of a mass (Mn) of said retaining element (7);
- obtaining a second quantity which is representative of a composition (Cn) made of a non-functional component of said retaining element (7);
- determining, from the first and second obtained quantities, an equivalent mass (Mn') which corresponds to the mass of said retaining element after said characteristic period of use of said member;
- evaluating a volume (Vn) from the equivalent mass and from a target assembly density (d) of said retaining element (7) in the annular space (11);
- determining a diameter (Dint) of the jacket (3) as a function of an external diameter of the unit for purifying exhaust gases (5) and of said volume (Vn);
- assembling the jacket (3), said retaining element (7) and the unit for purifying exhaust gases (5) so as to obtain a jacket (3), one diameter of which is equal to said determined diameter (Dint), the assembly density (d) of said retaining element (7) being equal to the target assembly density (d) after said characteristic period of use of said member.

2. Method according to claim 1, **characterised in that** obtaining the second quantity which is representative of a composition (Cn) made of a non-functional component of said retaining element (7) consists of

- measuring a characteristic electrical quantity of said retaining element;
- determining the composition (Cn) from the measured value of said electrical quantity.

3. Method according to claim 2, **characterised in that** the composition (Cn) made of a non-functional component of said retaining element (7) at the time of assembly is determined from the measured value of said electrical quantity by means of calibration curves.

4. Method according to claim 2 or claim 3, **characterised in that** said retaining element (7) is a sheet, and **in that** the step of measuring said characteristic electrical quantity of said retaining element consists of placing the sheet, according to the thickness thereof, between the plates of a capacitive sensor and of measuring the value of the capacitance of the capacitive sensor for a predetermined voltage applied to said plates.

5. Method according to any of the claims 1 to 4, **characterised in that** the method comprises furthermore a step of obtaining a third quantity which is representative of a mass (Mb) of the unit for purifying exhaust gases (5) and a step of determining, from the third obtained quantity, said target assembly density (d).

6. Method according to claim 5, **characterised in that** the determination of said target assembly density (d) consists of calculating, from the third obtained quantity, a maximum reference force (F) applied to the unit for purifying gases (5) during use of said member, then of determining the target assembly density (d) from the calculated maximum reference force (F), preferably by means of predetermined mappings.

7. Method according to any of the claims 1 to 6, **characterised in that** the jacket (3), said retaining element (7) and the unit for purifying exhaust gases (5) are assembled according to the following steps:

- disposing said retaining element (7) around the unit for purifying exhaust gases (5);
- inserting said retaining element (7) and the unit for purifying exhaust gases (5) into the jacket (3) so as to obtain a provisional diameter of the jacket (3) which is greater than the determined diameter (Dint) and a provisional assembly density for said retaining element (7);
- restricting the jacket (3) to the determined diameter ($D_{int}$).

8. Method according to claim 7, **characterised in that** the insertion step is produced by insertion by force of said retaining element (7) and of the unit for purifying exhaust gases (5) into the jacket (3), or by rolling the jacket (3) around said retaining element (7).

9. Method according to any of the claims 1 to 6, **characterised in that** the jacket (3), said retaining element (7) and the unit for purifying exhaust gases (5) are assembled according to the following steps:

- disposing said retaining element (7) around the unit for purifying exhaust gases (5);
- inserting said retaining element (7) and the unit for purifying exhaust gases (5) into the jacket (3) so as to obtain directly the determined diameter ($D_{int}$) for the jacket (3).

10. Method according to any of the claims 1 to 9, **characterised in that** it comprises a supplementary step consisting of obtaining a fourth quantity which corresponds to the external diameter (Db) of the unit for purifying exhaust gases (5).

## FIG.1

## FIG.2

## FIG.3

## FIG.4

## FIG.5

## FIG.6

**EP 2 414 649 B1**

## RÉFÉRENCES CITÉES DANS LA DESCRIPTION

### Documents brevets cités dans la description

- US 6389693 B